Europäisches Patentamt

European Patent Office

Office européen des brevets

(11) Publication number: 0 294 624
A2

## EUROPEAN PATENT APPLICATION

(21) Application number: 88107934.7

(51) Int. Cl.⁴: **B60J 3/02**

(22) Date of filing: 18.05.88

(30) Priority: 12.06.87 IT 6038487 U
21.10.87 IT 8348087

(43) Date of publication of application:
14.12.88 Bulletin 88/50

(84) Designated Contracting States:
AT BE CH DE ES FR GB GR IT LI LU NL SE

(71) Applicant: Burello, Giampaolo
Via G. Carducci 62
I-33074 Fontanafredda (PN)(IT)

(72) Inventor: Burello, Giampaolo
Via G. Carducci 62
I-33074 Fontanafredda (PN)(IT)

(74) Representative: Petraz, Gilberto Luigi
G.L.P. S.a.s. di Gilberto Petraz P.le Cavedalis
6/2
I-33100 Udine(IT)

(54) Auxiliary sun shield.

(57) Auxiliary sun shield (13) which is suitable to cooperate with a sun visor (11) as normally fitted to a vehicle and includes an axis of rotation (24) substantially normal to the sun visor (11) and which comprises a first plate (22) connected to the axis of rotation (24) and bearing the auxiliary sun shield (13) rotatably at one end thereof at determined rotary positions, such first plate (22) being applied to the sun visor (11) at an advanced position located towards the end of the sun visor (11).

fig.3b

fig.3c

EP 0 294 624 A2

# "AUXILIARY SUN SHIELD"

This invention concerns an auxiliary sun shield. To be more exact, the invention concerns an auxiliary sun shield suitable to screen a driver or passenger laterally.

The standard sun visor positioned laterally on vehicles (when fitted) generally leaves a more or less wide unshielded area between the sun visor itself and the upright of the door.

When the sun is in a position sideways to the vehicle, its rays pass through this unshielded area and beat on the head and neck of the person seated on that side of the vehicle.

This invention has the purpose mainly of shielding the driver or passenger from the sunlight passing through that unshielded area.

At the present time the sun visors are not movable or can be moved lengthwise to their axis of rotation, the axis of their traversing and their relative position of traversing remaining stationary.

Such systems are not satisfactory, especially when the vehicle is running on twisting roads where the reciprocal sideways positions of the vehicle and sun may often vary.

Patent US 3,071,408 shows an auxiliary sun shield able to rotate about an axis normal to the sun visor with which a vehicle is usually equipped. This auxiliary sun shield comprises screw-type clamping means which cooperate with resilient means.

Support means are included and are anchored to the sun visor in a substantially central position thereon.

This is a very complex mechanical embodiment in which the positioning is maintained by resilient means regulated by a screw.

Moreover, the auxiliary sun shield in this embodiment must consist of a rigid material of a given thickness.

Furthermore, the positioning of the auxiliary sunshield in a terminal position causes problems of maintaining the positioning, the ability to apply the shield, etc.

The present applicant has designed, tested and embodied the present invention to overcome these problems and to achieve a plurality of advantages.

According to the invention an auxiliary sun shield is provided according to the contents of the main claim. The dependent claims contain variants of the idea of the solution.

According to the invention the auxiliary sun shield can be fitted very simply on the standard sun visor and will remain included in the outline of the same.

If so required, the auxiliary sun shield according to the invention can be rotated by a pre-set angle so as to screen the neighbourhood of the space desired. After use it can be returned to its initial position.

According to the invention the auxiliary sun shield serves also to protect the head of the driver or passenger from the turbulence of the air when travelling with the small windows open.

The auxiliary sun shield can also be employed as a disk to indicate parking times when it is positioned so that it is clearly visible from outside the vehicle; in this case it will bear on both its surfaces an indication of the time of arrival and a pointer.

Moreover, it can be used as an advertising medium since its surfaces lend themselves readily to the application of words, drawings or anything else which it is wished to advertise.

The attached figures, which are given as a non-restrictive example, show the following:-

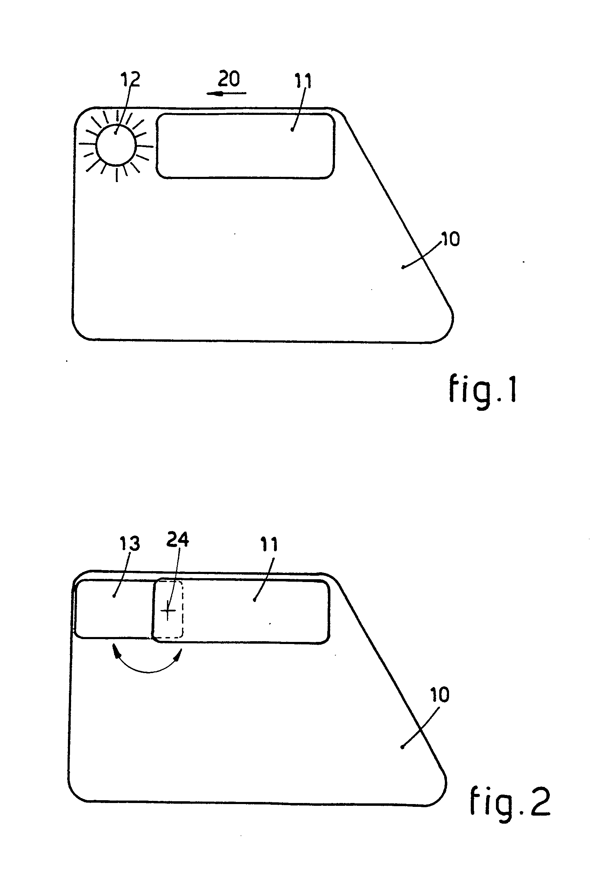

Figs.1 and 2 show diagrams of the side windows of the front doors with and without the invention;

Figs.3 show a special embodiment of the invention for use also as a disk indicating parking times.

A side window 10 with a traditional sun visor 11 leaves a free passage for the rays of the sun 12.

Even when moved in the direction of the arrow 20 along its lengthwise axis of rotation, the sun visor 11 leaves the front of the window area free instead of the back.

When the reciprocal sideways positions of the vehicle and sun are often changed, the state of the art is a source of great discomfort. According to the invention this discomfort is overcome by providing an auxiliary sun shield 13 which covers also the area which would otherwise remain free for the passage of the rays of the sun and of the air.

The auxiliary sun shield 13 according to the invention consists of a thin sheet of a material such as a plastic, metal, cardboard or wood suitably shaped and equipped advantageously with stiffening ribs.

Such an auxiliary sun shield 13 may be painted, left natural, coated, specially finished, etc. according to the aesthetic effect required.

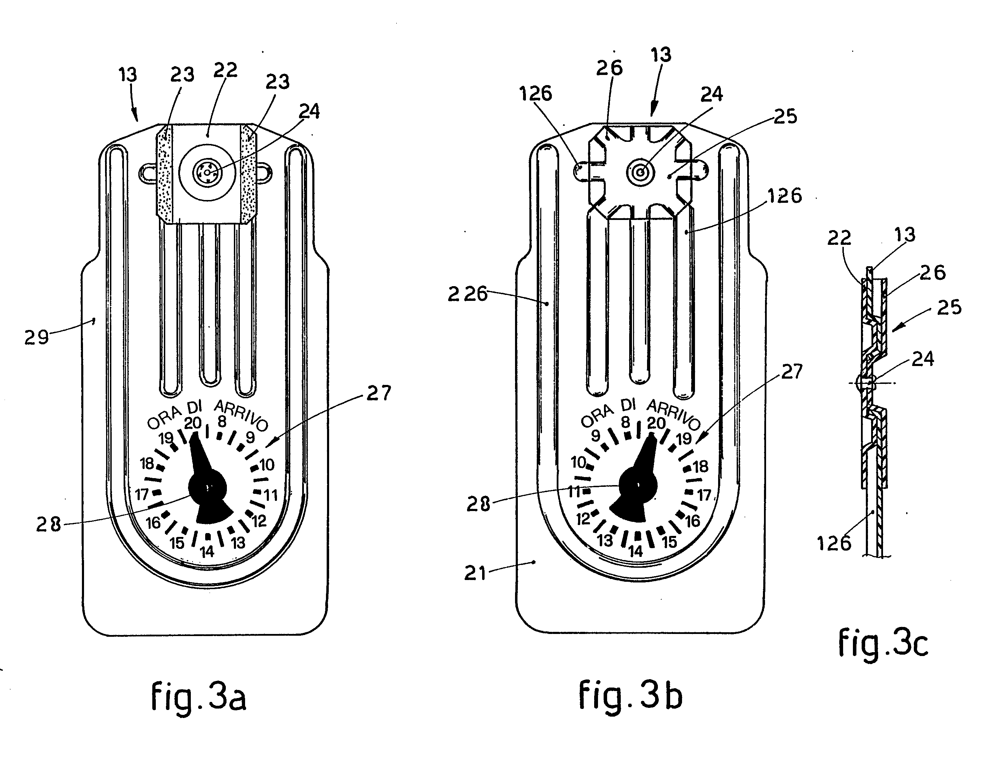

Figs.3 show a specially equipped embodiment of the auxiliary sun shield 13, which is employed also as a disk to indicate parking times. In this embodiment the positioning of the auxiliary sun shield 13 in relation to the sun visor 11 is performed by rotation about its axis of rotation 24.

Fig.3a shows a first side 29 of the auxiliary sun shield 13 which is fixed to the sun visor 11, while Fig.3b shows the second side 21 opposite to the first side 29 and Fig.3c shows a partial cross-section of the auxiliary sun shield 13 on an enlarged scale for clarity of illustration, this cross-section being that of the zone corresponding to its fixture to the sun visor 11.

A first plate 22 is included at the terminal portion of the first side 29 corresponding to the zone of fixture to the sun visor 11 and bears elements for anchorage to the sun visor 11, such elements consisting advantageously of pressure-sensitive adhesive strips 23.

The first plate 22 is suitable connected in a rigid manner on the axis of rotation of the auxiliary sun shield 13 to a resilient, suitably shaped second plate 25 positioned in coordination on the second side 21 of the auxiliary sun shield 13, the connection consisting, for instance, of a pivot pin or the like passing through a hole in the auxiliary sun shield 13.

The axis of rotation 24 cooperates with a terminal position of the auxiliary sun shield 13.

The second plate 25 comprises shaped portions 26 cooperating with corresponding shapings 126 provided on the body of the auxiliary sun shield 13. Such shapings 126 and shaped portions 26 are produced advantageously by moulding.

The shapings 126 have the further purpose of strengthening the auxiliary sun shield 13, as can be seen in the case of a lateral peripheral shaping 226.

When the auxiliary sun shield 13 has been secured to the sun visor 11 by the fixture strips 23, which are located at a terminal position on the sun visor 11, the auxiliary sun shield 13 can be rotated about the axis of rotation 24 so as to be positioned in one of the angular positions corresponding with cooperation between the shaped portions 26 of the second plate 25 and the shapings 126 on the auxiliary sun shield 13. In the example shown such positions are eight in number and correspond with angular rotations by 45°.

A zone at the other terminal portion of the auxiliary sun shield 13 on both sides thereof 29-21 is employed in a coordinated manner as a disk 27 to show parking times, the hour of arrival being inscribed, for instance, by screen printing and a pointer 28 which can be rotated by hand being comprised.

Words, drawings or anything else to be advertised can also be included if the auxiliary sun shield 13 is to be used also as an advertising medium.

## Claims

1 - Auxiliary sun shield (13) which is suitable to cooperate with a sun visor (11) as normally fitted to a vehicle and includes an axis of rotation (24) substantially normal to the sun visor (11) and which is characterized in that it comprises a first plate (22) connected to the axis of rotation (24) and bearing the auxiliary sun shield (13) rotatably at one end thereof at determined rotary positions, such first plate (22) being applied to the sun visor (11) at an advanced position located towards the end of the sun visor (11).

2 - Auxiliary sun shield (13) as claimed in Claim 1, in which the first plate (22) cooperates rigidly with a second resilient, suitably shaped plate (25) having the same axis of rotation (24).

3 - Auxiliary sun shield (13) as claimed in Claim 1 or 2, in which the second resilient, suitably shaped plate (25) comprises a plurality of shaped portions (26) cooperating with at least one shaping (126) provided on the body of the auxiliary sun shield (13).

4 - Auxiliary sun shield (13) as claimed in any claim hereinbefore, which is made of a thin plastic material, its shaping (126) acting also as a reinforcement and stiffener.

5 - Auxiliary sun shield (13) as claimed in any claim hereinbefore, in which there is provided a peripheral reinforcing and stiffening shaping (226).

6 - Auxiliary sun shield (13) as claimed in any claim hereinbefore, which is able to rotate between the first plate (22) and the second resilient, suitably shaped plate (25) and is resiliently pressed therebetween (22-25).

7 - Auxiliary sun shield (13) as claimed in any claim hereinbefore, which comprises a disk to indicate parking times.

12  20  11

10

fig.1

13  24  11

10

fig.2

fig.3c

fig.3b

fig.3a